# EUROPÄISCHE PATENTSCHRIFT

(11) **EP 0 567 167 B1**
(45) Veröffentlichungstag und Bekanntmachung des Hinweises auf die Patenterteilung: **09.10.1996**
(21) Anmeldenummer: 93200703.2
(22) Anmeldetag: 11.03.1993
(51) Int. Cl.: B01J 8/18, F28D 13/00

(54) **Verfahren zum Kühlen heisser Feststoffe im Wirbelbett**
Process for cooling hot solid materials in a fluidised bed
Procédé pour refroidir des matériaux solides dans un lit fluidifié

(30) Priorität: 24.04.1992 DE 4213475
(43) Veröffentlichungstag der Anmeldung: 27.10.1993
(73) Patentinhaber: METALLGESELLSCHAFT Aktiengesellschaft, D-60015 Frankfurt (DE)
(72) Erfinder: Ströder, Michael, Dr., W-6392 Neu-Anspach (DE); Albrecht, Johannes, Dr., W-6362 Wöllstadt 1 (DE); Janssen, Klaus, Dr., W-6451 Grosskrotzenburg (DE); Lewandowski, Wladislaw, W-6231 Schwalbach (DE); Hirschfelder, Hansjobst, W-6000 Frankfurt am Main 60 (DE)

(56) Entgegenhaltungen:
- EP-A- 0 340 852
- EP-A- 0 478 418

## Beschreibung

Die Erfindung betrifft ein Verfahren zum Kühlen heißer, körniger Feststoffe unter überatmosphärischem Druck bis 50 bar in einer ersten Kühlkammer und einer zweiten Kühlkammer, zwischen denen sich eine Trennwand befindet, die im unteren Bereich eine die beiden Kühlkammern verbindende Öffnung aufweist, wobei die zu kühlenden Feststoffe in beiden Kühlkammern Wirbelbetten bilden, welche mit in beiden Kammern angeordneten Kühleinrichtungen in Kontakt stehen, wobei man die zu kühlenden Feststoffe durch einen Feststoff-Zulauf oben auf das Wirbelbett der zweiten Kühlkammer leitet, die Feststoffe in der zweiten Kühlkammer vorwiegend in vertikaler Richtung nach unten zur Öffnung in der Trennwand führt und die Feststoffe anschließend in der ersten Kühlkammer vorwiegend in vertikaler Richtung aufwärts nach oben zu einem Feststoff-Ablauf führt, und wobei man Fluidisierungsgas in den unteren Bereich der beiden Wirbelbetten einleitet und durch die von einem Kühlfluid durchströmten Kühleinrichtungen Wärme indirekt abführt.

Ein Verfahren dieser Art und eine dafür geeignete Vorrichtung ist aus EP-A-0478418 bekannt. Der Erfindung liegt die Aufgabe zugrunde, das Verfahren zu verbessern und die Betriebskosten zu verringern. Dabei wird insbesondere eine intensive Kühlung der Feststoffe und ein geringer Bedarf an Fluidisierungsgas angestrebt.

Die Aufgabe wird beim eingangs genannten Verfahren erfindungsgemäß dadurch gelöst, daß die beiden Wirbelbetten eine Betthöhe von 3 bis 20 m und ein Verhältnis der Betthöhe zur durchschnittlichen Bettbreite von 3 : 1 bis 10 : 1 aufweisen, daß der Druck in beiden Wirbelbetten 5 bis 50 bar beträgt, daß sich die Kühleinrichtungen mindestens über die halbe Höhe des zugehörigen Wirbelbettes erstrecken, daß das Kühlfluid in beiden Kühleinrichtungen im Gleichstrom oder Gegenstrom zur vertikalen Bewegung der Feststoffe strömt und daß die Temperaturdifferenzen der Feststoffe zwischen dem unteren und oberen Bereich der Beiden Wirbelbetten mindestens 200°C betragen. Der Fluidisierungszustand in den Wirbelbetten ist der wie bei einem stationären Wirbelbett.

Wirbelbettkühler, die unter atmosphärischen Bedingungen oder Drücken unter 2 bar arbeiten, können wegen störender Blasenkoaleszenz nur mit geringer Betthöhe betrieben werden. Beim Verfahren der Erfindung, bei welchem man unter einem Druck von 5 bis 50 bar arbeitet, beträgt die Betthöhe mindestens 3 m. Dadurch werden die stationären Wirbelbetten über einer möglichst kleinen Grundfläche angeordnet und der Bedarf an Fluidisierungsgas gering gehalten.

Beim erfindungsgemäßen Verfahren beträgt das Verhältnis der Betthöhe zur durchschnittlichen Bettbreite 3 : 1 bis 10 : 1. Die durchschnittliche Bettbreite errechnet sich aus dem Mittelwert der größten und kleinsten Breite, gemessen auf einer horizontalen, durch das Wirbelbett gelegten Ebene, falls der Querschnitt nicht kreisförmig ist. Falls sich der Bettquerschnitt über die Betthöhe verändert, ergibt sich die durchschnittliche Bettbreite aus dem Mittelwert der jeweiligen Durchschnittswerte verschiedener Bettquerschnitte, die in gleichen Abständen von z.B. 50 cm in verschiedener Höhe durch das Wirbelbett gelegt werden.

Zu den Wirbelbetten bewegen sich die zu kühlenden Feststoffe zunächst abwärts und aufwärts. Dabei ist eine intensive Durchmischung der Feststoffe in vertikaler Richtung nicht zu erwarten, so daß sich ein Profil der Feststofftemperatur über der Betthöhe einstellt. Deshalb kann durch das in Leitungen der Kühleinrichtung aufwärts oder abwärts im Wirbelbett strömende Kühlfluid ein konsequenter Gegenstrom oder auch konsequenter Gleichstrom zwischen Kühlfluid und Feststoffen eingestellt werden. Dies führt insbesondere bei der Gegenstromführung zu einem hohen Wärmeübergang von den Feststoffen auf das Kühlfluid. Die Gleichstromführung hat Vorteile, wenn der Feststoff unmittelbar nach Eintritt in das Wirbelbett schnell abgekühlt werden soll oder wenn bei aufwärts gerichtetem Feststoffstrom das Kühlfluid verdampft werden soll.

Beim Kühlfluid kann es sich um eine Flüssigkeit oder aber um ein gas- oder dampfförmiges Fluid handeln. Verwendbare, bekannte Kühlflüssigkeiten sind z.B. Wasser, Öle oder Salzschmelzen, ferner kommen z.B. Wasserdampf oder die unterschiedlichsten Gase (z.B. Stickstoff) zum Abführen der Wärme infrage. Die heißen Feststoffe werden üblicherweise mit Temperaturen von 400 bis 1200°C herangeführt. Bei den erfindungsgemäß ausgebildeten hohen Wirbelbetten mit kleiner Querschnittsfläche ist der Bedarf an Fluidisierungsgas relativ gering. Pro m³ Wirbelbettvolumen und pro Stunde kommt man mit 300 bis 7500 Nm³ Fluidisierungsgas aus.

Ausgestaltungsmöglichkeiten des Verfahrens werden mit Hilfe der Zeichnung erläutert. Es zeigt:
- Fig. 1: in schematischer Darstellung einen Längsschnitt durch eine erste Kühlvorrichtung, in der jedoch das erfindungsgemäße Verfahren nicht durchgeführt wird,
- Fig. 2: eine zweite Kühlvorrichtung im Längsschnitt, die für das erfindungsgemäße Verfahren geeignet ist,
- Fig. 3: ein Diagramm zum Bedarf an Fluidisierungsgas und
- Fig. 4: einen bekannten Wirbelbettkühler im Längsschnitt.

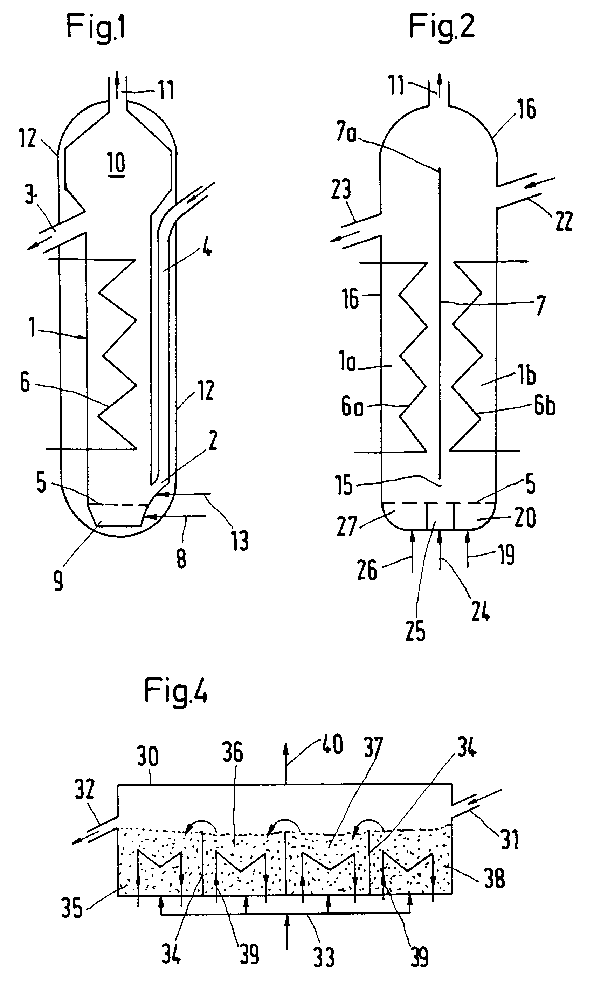

Die Vorrichtung der Fig. 1 weist eine hohe, schlanke Kühlkammer (1) auf, die einen Feststoff-Zulauf (2) und einen Feststoff-Ablauf (3) besitzt. In der Kühlkammer (1) befindet sich im Betrieb ein nicht dargestelltes Wirbelbett aus körnigen Feststoffen, die durch die Leitung (4) herangeführt werden. Das Wirbelbett reicht von einem Düsenrost (5) bis zum Ablauf (3) und es umgibt die gewendelte Leitung einer Kühleinrichtung (6), durch die man ein Kühlfluid zur Wärmeabfuhr leitet. Fluidisierungsgas wird durch die Leitung (8) herangeführt und gelangt zunächst in eine Verteilkammer (9), bevor es durch den Düsenrost (5) hindurch aufwärts steigt und das Wirbelbett fluidisiert. Nach Austritt aus dem Wirbelbett strömen die Fluidisierungsgase zunächst in einen erweiterten Beruhigungsraum (1) und verlassen die Kühlvorrichtung durch den Abzug (11), an den nicht dargestellte weitere Behandlungseinrichtungen, z.B. eine Entstaubung, angeschlossen sein können.

Die Kühlkammer (1) kann so ausgebildet sein, daß das darin befindliche Wirbelbett eine Betthöhe von 3 bis 20 m aufweist. Die zu kühlenden körnigen Feststoffe bewegen sich vom Feststoff-Zulauf (2) unter der Wirkung des Fluidisierungsgases, z.B. Luft, in der Kühlkammer (1) aufwärts und verlassen das Wirbelbett durch den Ablauf (3). Durch diese vorgegebene Bewegung der Feststoffe kann das in der Kühleinrichtung (6) strömende Kühlfluid im Gleichstrom oder Gegenstrom zu den Feststoffen geführt werden. Zum Regeln der Menge der in das Wirbelbett eintretenden Feststoffe kann im Zulauf (2) eine Leitung (13) zum Einspeisen eines steuernden Gases vorgesehen werden. Die Kühlkammer (1) und der Beruhigungsraum (10) werden von einem druckfesten Behälter (12) eingeschlossen.

Die Kühlvorrichtung der Fig. 2, die für das erfindungsgemäße Verfahren geeignet ist, zeigt eine erste Kühlkammer (1a) und eine zweite Kühlkammer (1b). Zwischen den Kühlkammern (1a) und (1b) befindet sich eine Trennwand (7), wobei zwischen dem Düsenrost (5) und der Unterkante der Trennwand (7) eine Öffnung (15) bleibt. Ein druckfestes Gehäuse (16) schließt die Kühlkammern ein, es weist einen Feststoff-Einlaß (22) und einen Feststoff-Ablauf (23) auf. Die Oberkante (7a) der Trennwand (7) liegt höher als der Einlaß (22) und der Ablauf (23). Wirbelgase verlassen das Gehäuse durch den Abzug (11).

Die heißen Feststoffe, die durch den Einlaß (22) herangeführt werden, gelangen zunächst in die zweite Kühlkammer (1b), in welcher sich ein Wirbelbett befindet, das hier als "vorgeschaltetes Wirbelbett" bezeichnet wird durch die Leitung (19) herangeführt, gelangt in die Verteilkammer (20) und strömt dann aufwärts durch die zweite Kühlkammer (1b) bis zum Abzug (11). Die Feststoffe bewegen sich im vorgeschalteten Wirbelbett in der zweiten Kühlkammer (1b) abwärts und treten durch die Öffnung (15) in das Wirbelbett der ersten Kühlkammer (1a) ein. Der Bereich der Öffnung (15) besitzt eine eigene Fluidisierungsgas-Zufuhr durch die Leitung (24) und die Verteilkammer (25), die sich unter dem Düsenrost (5) befindet. Durch Verändern der durch die Leitung (24) herangeführten Gasmenge kann die Menge der durch die Öffnung (15) hindurchtretenden Feststoffe beeinflußt werden. Auf diese Weise kann man den Feststoffstrom zur ersten Kühlkammer (1a) in der Art eines fluiddynamischen Ventils steuern.

Die Öffnung (15) dient als Feststoff-Zulauf für das Wirbelbett in der ersten Kühlkammer (1a), in welchem sich die Feststoffe im stationären Wirbelbett aufwärts bewegen, bis sie die Kühlvorrichtung durch den Ablauf (23) verlassen. Fluidisierungsgas wird durch die Leitung (26) herangeführt und tritt durch die Verteilkammer (27) und den Rost (5) in das Wirbelbett ein. Abweichend von der Darstellung der Fig. 2 können die beiden Kühlkammern (1a) und (1b) auch in einem nicht für höheren Druck ausgelegten Gehäuse angeordnet sein, das sich in einem separaten Druckgehäuse befindet, wie es in Fig. 1 dargestellt ist.

Für die erste Kühlkammer (1a) und die zweite Kühlkammer (1b) sowie die darin befindlichen Wirbelbetten gilt das bereits zuvor für ein einzelnes Wirbelbett Gesagte bezüglich der Betthöhe, des Verhältnisses der Betthöhe zur durchschnittlichen Bettbreite und zur Temperaturdifferenz zwischen dem unteren und dem oberen Bereich eines Wirbelbettes. Wie ersichtlich, kann sowohl im vorgeschalteten Wirbelbett als auch im nachgeschalteten Wirbelbett in der ersten Kühlkammer (1a) ein Gleichstrom oder auch ein Gegenstrom zwischen Feststoffen und Kühlfluid eingestellt werden, wobei das Kühlfluid durch die Kühleinrichtung (6a) und (6b) strömt.

In vielen Anwendungsfällen liegen die Geschwindigkeiten des Fluidisierungsgases im Bereich von 0,2 bis 0,8 m/s und sie können näherungsweise als druckunabhängig angenommen werden.

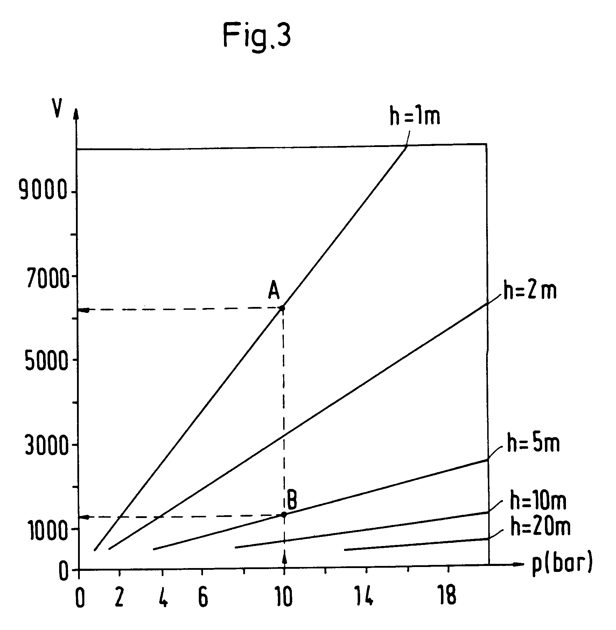

Im Diagramm der Fig. 3 ist für eine Geschwindigkeit des Fluidisierungsgases von 0,5 m/s und einer Temperatur von 500°C sowie Korngrößen der Feststoffe im Wirbelbett von 100 bis 400 µm zum Fluidisierungsgasbedarf V (in Nm³ pro Stunde und pro m³ Wirbelbettvolumen) die ermittelte Abhängigkeit vom Druck p für verschiedene Betthöhen h (h = 1, 2, 5, 10 und 20 m) dargestellt. Hierbei zeigt z.B. Punkt (A), daß man bei p = 10 bar und einer Höhe h = 1 m mit V = 6500 arbeiten muß, wogegen man bei gleichem Druck und einer Betthöhe h = 5 m (Punkt (B)) nur ein V von etwa 1300 braucht.

### Vergleichsbeispiel

Im nachfolgend beschriebenen, teilweise berechneten Vergleich wird ein üblicher, bekannter Wirbelbettkühler von flacher Bauart gemäß Fig. 4 mit einem hohen Wirbelbettkühler gemäß Fig. 1 verglichen. Der Wirbelbettkühler der Fig. 4 hat ein Gehäuse (30) mit einem Feststoff-Zulauf (31), einem Feststoff-Ablauf (32), einem Zufuhrsystem (33) für Fluidisierungsgas und er ist durch drei wehrartige Trennwände (34) in vier Kammern (35), (36), (37) und (38) unterteilt. In jeder Kammer befindet sich ein Wirbelbett, wobei sich die Feststoffe über die Wände (34) hinweg vom Zulauf (31) durch die Wirbelbetten bis zum Ablauf (32) bewegen. Jedes Wirbelbett wird durch eine mit Kühlwasser gespeiste Kühleinrichtung (39) indirekt gekühlt, Fluidisierungsgas zieht in der Leitung (40) ab.

Im Vergleichsbeispiel beträgt die horizontale Querschnittsfläche jeder Kammer der Einrichtung gemäß Fig. 4 0,88 m², ebenso hat das Wirbelbett gemäß Fig. 1 eine horizontale Querschnittsfläche von 0,88 m². Weitere Daten ergeben sich aus der nachfolgenden Tabelle:

| | Fig. 4 | Fig. 1 |
|---|---|---|
| Wirbelbett-Höhe | 0,5 m | 2,0 m |
| Gesamtes Wirbelbett-Volumen | 1,76 m³ | 1,76 m³ |
| Oberfläche der Kühleinrichtung | 36 m² | 36 m² |
| Druck | 10 bar | 10 bar |
| Feststoffdurchsatz | 2 500 kg/h | 2 500 kg/h |
| Kühlwasserverbrauch | 8 000 kg/h | 8 000 kg/h |
| Fluidisierungsgasverbrauch | 48 000 kg/h | 12 000 kg/h |

| Temperaturen: | | |
|---|---|---|
| Feststoffe ein | 700 °C | 700 °C |
| Feststoffe aus | 126 °C | 123 °C |
| Kühlwasser ein | 30 °C | 30 °C |
| Kühlwasser aus | 92 °C | 98 °C |
| Fluidisierungsgas ein | 150 °C | 150 °C |
| Fluidisierungsgas aus | 146 °C | 123 °C |

Für die Daten, die teilweise berechnet sind, wird von Feststoffen ausgegangen, die aus Kohlenasche bestehen und Korngrößen im Bereich von 0,1 bis 1 mm aufweisen. Als Fluidisierungsgas dient Luft, die in allen Fällen mit einer Geschwindigkeit von 0,4 bis 0,7 m/sec durch die Wirbelbetten geleitet wird.

Die Tabelle zeigt, daß man bei gleichem Wirbelbettvolumen, gleicher Kühleinrichtung, gleichem Kühlwasserbedarf und gleicher Fluidisierungsgasgeschwindigkeit beim hohen Wirbelbett der Fig. 1 mit einem Viertel des Fluidisierungsgasbedarfs gegenüber Fig. 4 auskommt, wobei auch der konstruktive Aufwand geringer ist. Dabei wurden tote Ecken, die erfahrungsgemäß bei flachen Wirbelbettkühlern gemäß Fig. 4 bevorzugt auftreten und deren Wirksamkeit zusätzlich verschlechtern, in den Berechnungen nicht berücksichtigt.

## Patentansprüche

1. Verfahren zum Kühlen heißer, körniger Feststoffe unter überatmosphärischem Druck bis 50 bar in einer ersten Kühlkammer (1a) und einer zweiten Kühlkammer (1b), zwischen denen sich eine Trennwand (7) befindet, die im unteren Bereich eine die beiden Kühlkammern verbindende Öffnung (15) aufweist, wobei die zu kühlenden Feststoffe in beiden Kühlkammern Wirbelbetten bilden, welche mit in beiden Kammern angeordneten Kühleinrichtungen (6a, 6b) in Kontakt stehen, wobei man die zu kühlenden Feststoffe durch einen Feststoff-Zulauf (22) oben auf das Wirbelbett der zweiten Kühlkammer (1b) leitet, die Feststoffe in der zweiten Kühlkammer vorwiegend in vertikaler Richtung nach unten zur Öffnung (15) in der Trennwand (7) führt und die Feststoffe anschließend in der ersten Kühlkammer (1a) vorwiegend in vertikaler Richtung aufwärts nach oben zu einem Feststoff-Ablauf (23) führt, und wobei man Fluidisierungsgas in den unteren Bereich der beiden Wirbelbetten einleitet und durch die von einem Kühlfluid durchströmten Kühleinrichtungen Wärme indirekt abführt, dadurch gekennzeichnet, daß die beiden Wirbelbetten eine Betthöhe von 3 bis 20 m und ein Verhältnis der Betthöhe zur durchschnittlichen Bettbreite von 3 : 1 bis 10 : 1 aufweisen, daß der Druck in beiden Wirbelbetten 5 bis 50 bar beträgt, daß sich die Kühleinrichtungen mindestens über die halbe Höhe des zugehörigen Wirbelbettes erstrecken, daß das Kühlfluid in beiden Kühleinrichtungen im Gleichstrom oder Gegenstrom zur vertikalen Bewegung der Feststoffe strömt und daß die Temperaturdifferenzen der Feststoffe zwischen dem unteren und oberen Bereich der beiden Wirbelbetten mindestens 200°C betragen.

## Claims

1. Method for the cooling of hot, granular solids at superatmospheric pressure up to 50 bar in a first cooling chamber (1a) and a second cooling chamber (1b), between which there is a partition (7) which has in its lower region an opening (15) connecting the two cooling chambers, the solids to be cooled forming fluidised beds in both cooling chambers, which beds are in contact with cooling means (6a, 6b) arranged in both chambers, the solids to be cooled being passed through a solids inlet (22) at the top onto the fluidised bed of the second cooling chamber (1b), the solids in the second cooling chamber being guided downwards predominantly in the vertical direction to the opening (15) in the partition (7) and the solids in the first cooling chamber (1a) then being guided upwards predominantly in the vertical direction to a solids outlet (23), and wherein fluidising gas is introduced into the lower region of the two fluidised beds and heat is removed indirectly through the cooling means through which a cooling fluid flows, characterised in that the two fluidised beds have a bed height of 3 to 20 m and a ratio of the bed height to the average bed width of 3 : 1 to 10 : 1, that the pressure in both fluidised beds is 5 to 50 bar, that the cooling means extend over at least half the height of the associated fluidised bed, that the cooling fluid in both cooling means flows in a co-current flow or counterflow to the vertical movement of the solids and that the temperature differences of the solids between the lower and upper region of the two fluidised beds are at least 200°C.

## Revendications

1. Procédé de refroidissement de matières solides chaudes en grains sous une pression supérieure à la pression atmosphérique allant jusqu'à 50 bars dans une première chambre (1a) de refroidissement et une deuxième chambre (1b) de refroidissement entre lesquelles se trouve une cloison (7) qui comporte dans la partie inférieure une ouverture (15) mettant les deux chambres de refroidissement en communication, les matières solides à refroidir formant dans les deux chambres de refroidissement des lits fluidisés qui sont en contact avec des dispositifs (6a, 6b) de refroidissement montés dans les deux chambres, la matière à refroidir étant envoyée par un conduit d'entrée de la matière solide du haut sur le lit fluidisé de la deuxième chambre (1b) de refroidissement, la matière solide dans la seconde chambre de refroidissement étant envoyée principalement en direction verticale vers le bas à l'ouverture (15) de la cloison (7) et la matière solide passant ensuite dans la première chambre (1a) de refroidissement principalement en direction verticale ascendante en allant vers le haut à un conduit (23) de sortie de la matière solide et du gaz de fluidisation étant envoyé dans les parties inférieures des deux lits fluidisés et de la chaleur étant évacuée indirectement par les dispositifs de refroidissement dans lesquels passe un fluide de refroidissement, caractérisé en ce que les deux lits fluidisés ont une hauteur de lit de 3 à 20 m et un rapport de la hauteur du lit à la largeur moyenne du lit de 3:1 à 10:1, en ce que la pression dans les deux lits fluidisés est comprise entre 5 et 50 bars, en ce que les dispositifs de refroidissement s'étendent au moins sur la moitié de la hauteur du lit fluidisé associé, en ce que le fluide de refroidissement passe dans les dispositifs de refroidissement en courant du même sens ou à contre-courant du déplacement vertical des matières solides et en ce que les différences de température de la matière solide entre la partie inférieure et la partie supérieure des deux lits fluidisés sont d'au moins 200°C.
